(19) Europäisches Patentamt
European Patent Office
Office européen des brevets

(11) **EP 2 478 513 B1**

(12) **FASCICULE DE BREVET EUROPEEN**

(45) Date de publication et mention
de la délivrance du brevet:
**08.11.2017 Bulletin 2017/45**

(21) Numéro de dépôt: **10760953.9**

(22) Date de dépôt: **14.09.2010**

(51) Int Cl.:
*G09B 9/28* (2006.01)     *G05G 9/04* (2006.01)
*B64C 13/04* (2006.01)     *G09B 9/00* (2006.01)
*G06F 3/01* (2006.01)

(86) Numéro de dépôt international:
**PCT/EP2010/063463**

(87) Numéro de publication internationale:
**WO 2011/032937 (24.03.2011 Gazette 2011/12)**

(54) **PROCÉDÉ DE SIMULATION DE MOUVEMENTS PROPRES PAR RETOUR HAPTIQUE ET DISPOSITIF METTANT EN OEUVRE LE PROCÉDÉ**

SIMULATIONSVERFAHREN SPEZIFISCHER BEWEGUNGEN DURCH HAPTISCHE RÜCKMELDUNG UND ENTSPRECHENDER SIMULATOR

METHOD FOR SIMULATING SPECIFIC MOVEMENTS BY HAPTIC FEEDBACK, AND DEVICE IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **17.09.2009 FR 0956406**

(43) Date de publication de la demande:
**25.07.2012 Bulletin 2012/30**

(73) Titulaires:
• **Centre National de la Recherche Scientifique**
**75016 Paris (FR)**
• **INRIA - Institut National de Recherche en Informatique et en Automatique**
**78150 Le Chesnay (FR)**

(72) Inventeurs:
• **OUARTI, Nizar**
**F-91410 Dourdan (FR)**
• **LECUYER, Anatole**
**F-35000 Rennes (FR)**
• **BERTHOZ, Alain**
**F-75006 Paris (FR)**

(74) Mandataire: **Cabinet Netter**
**36, avenue Hoche**
**75008 Paris (FR)**

(56) Documents cités:
**WO-A1-97/12357      WO-A1-98/49614**

**WO-A1-2007/127101**

• **Anonymous: "HAPTION Virtuose 6D35-45", , 15 décembre 2007 (2007-12-15), pages 1-2, XP002587455, Extrait de l'Internet: URL:http://web.archive.org/web/20071215161953/http://www.inition.co.uk/inition/pdf/ffhaptic_haption_6d35-45.pdf [extrait le 2010-06-16]**
• **LECUYER A ET AL: "Can Haptic feedback improve the perception of self-motion in virtual reality?", HAPTIC INTERFACES FOR VIRTUAL ENVIRONMENT AND TELEOPERATOR SYSTEMS, 20 04. HAPTICS '04. PROCEEDINGS. 12TH INTERNATIONAL SYMPOSIUM ON CHICAGO, IL, USA 27-28 MARCH 2004, PISCATAWAY, NJ, USA,IEEE, 27 mars 2004 (2004-03-27), pages 208-215, XP010698172, DOI: DOI:10.1109/HAPTIC.2004.1287198 ISBN: 978-0-7695-2112-1**
• **LECUYER A ET AL: "Can Haptic feedback improve the perception of self-motion in virtual reality?", HAPTIC INTERFACES FOR VIRTUAL ENVIRONMENT AND TELEOPERATOR SYSTEMS, 20 04. HAPTICS '04. PROCEEDINGS. 12TH INTERNATIONAL SYMPOSIUM ON CHICAGO, IL, USA 27-28 MARCH 2004, PISCATAWAY, NJ, USA,IEEE, 27 March 2004 (2004-03-27), pages 208-215, XP010698172, DOI: DOI:10.1109/HAPTIC.2004.1287198**

**(Cont. page suivante)**

- Anonymous: "HAPTION Virtuose 6D35-45", , 15 December 2007 (2007-12-15), pages 1-2, XP002587455, Retrieved from the Internet: URL:https://www.virtalis.com/wp-content/uploads/virtuose6d35-45-en.pdf [retrieved on 2017-03-14]

- O. ERNST; M. S. BANKS: "Human integrate visual and haptic information in a statistically optimal fashion", NATURE, vol. 415, January 2002 (2002-01),

**Description**

L'invention concerne un procédé de simulation de mouvements par retour haptique et un dispositif mettant en oeuvre le procédé. Elle s'applique notamment aux domaines de la simulation et de la perception de mouvement. L'invention peut être mise en oeuvre par exemples dans des simulateurs d'automobiles ou d'aéronef, dans des jeux vidéo, dans le cadre d'attractions proposées dans des parcs à thèmes, ou dans des salles de spectacle, comme par exemple des salles de cinéma.

La perception de son propre mouvement, notamment chez l'homme, est le résultat d'un mécanisme complexe dans lequel plusieurs modalités sont impliquées. Les modalités impliquées sont notamment le toucher, l'audition, la vision, la proprioception et le système vestibulaire. Dans la suite de la description, la modalité haptique est définie comme étant la composée des modalités de toucher et de proprioception. En intervenant sur une modalité, il est possible de faire ressentir une impression de mouvement à un individu immobile ou quasi immobile. Il est également possible de stimuler plusieurs modalités simultanément afin de renforcer cette impression. Pour cela, des mécanismes de perception multimodale font l'objet de nombreuses études, comme par exemple dans l'article de O. Ernst et M. S. Banks intitulé Human integrate visual and haptic information in a statistically optimal fashion, Nature, Vol. 415, Janvier 2002.

Il existe aujourd'hui trois approches principales se basant sur des stimuli mécaniques dans le but de faire ressentir à un individu une impression de mouvement. En parallèle, un flux visuel est habituellement projeté sur un écran afin de stimuler la vision.

Le principe de la première approche réside dans la transmission de vibrations à un utilisateur. Le terme « utilisateur » désigne dans la suite de la description tout individu utilisant un dispositif de simulation de mouvement et étant ainsi susceptible de ressentir une impression de mouvement. Si ledit utilisateur est assis sur un siège, un ou plusieurs vibreurs peuvent être positionnés sous ce siège et être activés lorsque la transmission d'une impression de mouvement est décidée. Cette approche est la plus rudimentaire des trois approches, mais aussi la moins coûteuse à mettre en oeuvre. En effet, les signaux permettant de contrôler les vibreurs sont simples et la bande de fréquence des vibrations limitée. Par contre, une telle approche ne participe pas à faire ressentir une impression d'accélération.

La seconde approche est basée sur l'utilisation de vérins hydrauliques. Un simulateur utilisant cette approche est habituellement composé d'une cabine fixée sur une plate-forme à vérins, l'utilisateur étant présent dans la cabine. Le contrôle des vérins permet d'incliner la cabine et il est ainsi possible de transmettre une impression de mouvement. A la différence de l'approche basée sur l'utilisation de vibreurs, une impression d'accélération peut être transmise, mais de manière intermittente. Par ailleurs, ce type d'approche implique des coûts important de mise en oeuvre.

Dans une troisième approche, également coûteuse, des rails sont utilisés pour mettre en mouvement une cabine ou un siège sur lequel l'utilisateur est positionné. Cette approche permet de transmettre une impression d'accélération de courte durée, et ce à cause de la taille limitée des rails utilisés. Une autre limitation liée à cette méthode est que la simulation de mouvement n'est pas temps réel. En effet, des calculs liés notamment à la trajectoire de mouvement simulée, doivent être effectués avant la mise en mouvement de la cabine ou du siège sur les rails. Par ailleurs, la mise en oeuvre de cette approche induit des équipements de taille importante.

Une limitation commune à ces trois approches est qu'une impression d'accélération longue et continue ne peut pas être transmise.

Le document XP002587455 "Haption Virtuose 6D35-45" décrit un système à retour d'effort avec une interface haptique à 6 degrés de liberté. Un but de l'invention est notamment de pallier les inconvénients précités.

A cet effet l'invention a pour objet un procédé de simulation de mouvements d'un véhicule virtuel, un utilisateur étant en contact physique avec un simulateur comprenant une interface haptique à retour de force, ledit contact physique correspondant à au moins un point de contact physique entre l'interface haptique et le corps de l'utilisateur représentatif d'un point de contact virtuel entre l'utilisateur et le véhicule virtuel. Le procédé comporte au moins deux étapes. Une première étape détermine un vecteur d'accélération linéaire $\vec{a}_{lin}$ et un vecteur vitesse linéaire $\vec{v}_{lin}$ au point de contact virtuel entre l'utilisateur et le véhicule virtuel, lesdits vecteurs étant représentatifs du mouvement du véhicule au niveau dudit point. Une seconde étape déduit un vecteur force $\vec{F}_{3D}$ à trois dimensions du vecteur d'accélération linéaire $\vec{a}_{lin}$ et du vecteur vitesse linéaire $\vec{v}_{lin}$, ledit vecteur force étant déterminé par combinaison linéaire desdits vecteurs accélération linéaire et vitesse, la force correspondante étant appliquée par l'interface haptique sensiblement au niveau du point de contact physique..

Selon un aspect de l'invention, la force $\vec{F}_{3D}$ peut être déduite, par exemple, d'une combinaison linéaire de puissances de l'accélération linéaire, de la vitesse linéaire et de la dérivée temporelle de l'accélération linéaire.

Selon un aspect de l'invention, le procédé comporte une étape déterminant un vecteur d'accélération angulaire $\vec{a}_{ang}$ au point de contact virtuel entre l'utilisateur et l'interface haptique, ledit vecteur étant représentatif du mouvement du véhicule au niveau dudit point de contact virtuel.

Le procédé comporte, par exemple, une étape déduisant un vecteur couple $\vec{C}_{3D}$ , à trois dimensions, du vecteur

d'accélération angulaire $\vec{a}_{ang}$, ledit vecteur couple étant proportionnel audit vecteur accélération et le couple correspondant étant appliqué par l'interface haptique sensiblement au niveau du point de contact physique.

La force $\vec{F}_{3D}$ vérifie, par exemple, l'expression suivante :

$$\vec{F}_{3D} = \alpha \times m \times \vec{a}_{lin}$$

dans laquelle :

$\vec{a}_{lin}$ est le vecteur d'accélération linéaire représenté en trois dimensions ;
$\alpha$ est un coefficient réel paramétrable ;
m est la masse du véhicule simulé.

Dans un mode de réalisation, le couple $\vec{C}_{3D}$ vérifie l'expression suivante :

$$\vec{C}_{3D} = \beta \times I \times \vec{a}_{ang}$$

dans laquelle :

$\vec{a}_{ang}$ est le vecteur d'accélération angulaire représenté en trois dimensions ;
$\beta$ est un coefficient réel paramétrable pouvant prendre un valeur positive ou négative ;
I est le moment d'inertie du véhicule simulé.

Dans un mode de réalisation, le point de contact physique entre l'interface haptique et l'utilisateur correspond à un point d'appui rigide avec le véhicule virtuel.

Dans un autre mode de réalisation, le point de contact physique entre l'interface haptique et l'utilisateur correspond à un point de contact virtuel avec un équipement de commande du véhicule virtuel.

L'invention a aussi pour objet un dispositif de simulation de mouvements d'un véhicule virtuel, un utilisateur étant en contact physique avec le dispositif comprenant une interface haptique à retour de force, ledit contact physique correspondant à au moins un point de contact physique entre l'interface haptique et le corps de l'utilisateur représentatif d'un point de contact virtuel entre l'utilisateur et le véhicule virtuel. Ledit dispositif comporte des moyens pour déterminer un vecteur d'accélération linéaire $\vec{a}_{lin}$ et un vecteur vitesse linéaire $\vec{v}_{lin}$ au point de contact virtuel entre l'utilisateur et le véhicule virtuel, lesdits vecteurs étant représentatifs du mouvement du véhicule virtuel au niveau dudit point et des moyens pour déduire un vecteur force $\vec{F}_{3D}$ à trois dimensions du vecteur d'accélération linéaire $\vec{a}_{lin}$ et du vecteur vitesse v, ledit vecteur force étant déterminé par combinaison linéaire desdits vecteurs accélération linéaire et vitesse, la force correspondante étant appliquée par l'interface haptique sensiblement au niveau du point de contact.

Dans un mode de réalisation de l'invention, la force $\vec{F}_{3D}$ est déduite d'une combinaison linéaire de puissances de l'accélération linéaire, de la vitesse linéaire et de la dérivée temporelle de l'accélération linéaire.

Selon un mode de mise en oeuvre, le dispositif comporte des moyens pour déterminer un vecteur d'accélération angulaire $\vec{a}_{ang}$ au point de contact entre l'utilisateur et l'interface haptique, ledit vecteur étant représentatif du mouvement du véhicule au niveau dudit point de contact.

Le dispositif comporte, par exemple, des moyens pour déduire un vecteur couple $\vec{C}_{3D}$, à trois dimensions, du vecteur d'accélération angulaire $\vec{a}_{ang}$, ledit vecteur couple étant proportionnel audit vecteur accélération et le couple correspondant étant appliqué par l'interface haptique sensiblement au niveau du point de contact.

Selon un mode de réalisation, l'interface haptique est un bras à retour de force comprenant un manche utilisé comme point de contact avec le corps de l'utilisateur.

Selon un autre mode de réalisation, l'interface haptique est un bras à retour de force comprenant un volant à retour de force utilisé comme point de contact avec le corps de l'utilisateur.

Le dispositif comprend, par exemple, des moyens pour projeter une séquence d'image vidéo à l'utilisateur, ladite séquence étant représentative du mouvement simulé du véhicule

L'invention présente notamment l'avantage déterminant de pouvoir être mise en oeuvre sans entrainer un encombrement important. Par ailleurs celle-ci peut être utilisée dans le cadre de simulations en temps réels.

D'autres caractéristiques et avantages de l'invention apparaîtront à l'aide de la description qui suit donnée à titre illustratif et non limitatif, faite en regard des dessins annexés parmi lesquels :

- la figure 1 illustre le procédé de simulation de mouvements selon l'invention ;
- la figure 2 donne un exemple de dispositif de simulation mettant en oeuvre le procédé selon l'invention ;
- la figure 3 donne un exemple de bras à retour de force associé à un volant à retour de force.

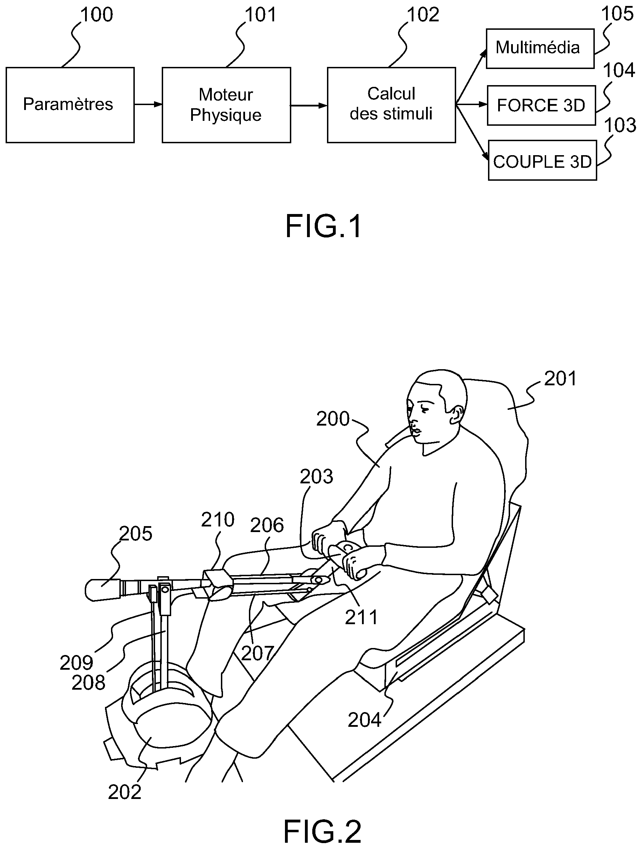

La figure 1 illustre le procédé de simulation de mouvements selon l'invention. Le procédé permet notamment le contrôle d'une interface haptique, par exemple à retour de force. Une sensation de mouvement est transmise à l'utilisateur stimulé par ladite interface haptique.

Une interface haptique à retour de force est habituellement utilisée pour reconstituer des sensations physiques liées à une action perçue visuellement sur un écran, par exemple. Pour cela, l'interface haptique s'appuie sur au moins un dispositif mécanique permettant de transmettre des forces dites forces de retour à l'utilisateur de l'interface.

Dans le domaine de la simulation de mouvements de véhicule, de bateau ou d'aéronef, un volant ou une manette à retour de force peut être utilisée comme interface haptique. Les effets de résistance liés à la conduite peuvent alors être potentiellement ressentis par l'utilisateur. Dans la suite de la description, le terme véhicule est utilisé et désigne tout équipement mobile pouvant contenir au moins un utilisateur.

Le procédé selon l'invention peut être décomposé, par exemple, en trois étapes, une étape préalable et deux étapes principales.

Une étape préalable de paramétrage 100 permet de définir le type de simulation de véhicule et ses caractéristiques. Ainsi l'environnement dans lequel se déplace le véhicule est clairement défini. Si le véhicule simulé est un véhicule sur rail, il est alors possible de choisir le parcours et le type de rails utilisés. Il est également possible de paramétrer le type de terrain utilisé, par exemple un terrain de type accidenté. D'autres éléments et leurs propriétés peuvent aussi être sélectionnés, par exemple le type de ciel ou la présence de la mer et sa localisation dans l'espace virtuel de déplacement du véhicule simulé.

Cette étape de paramétrage 100 permet également de sélectionner le type véhicule simulé, appelé véhicule virtuel dans la suite de la description. Par exemple, un train, un vélo, une voiture, un avion ou un bateau peuvent être sélectionnés. Le véhicule peut également correspondre à un être humain de manière à simuler un mouvement de type marche à pied par exemple. C'est aussi dans cette étape de paramétrage 100 que peut être déterminée le type de liaison, rigide ou non, entre un point de contact virtuel et le véhicule virtuel. Un point de contact virtuel est défini comme une partie du véhicule virtuel avec laquelle l'utilisateur est censé interagir virtuellement, comme un volant, une barre dans un bus, une corde attachée à un wagon, ou toute autre partie du véhicule virtuel potentiellement en contact avec l'utilisateur. Dans la suite de la description, un point de contact physique est défini comme étant la partie de l'interface haptique utilisée en contact réel avec l'utilisateur.

Dans une première étape principale 101, un moteur physique analyse les mouvements virtuels du véhicule simulé dans un espace à trois dimensions par des méthodes existant dans l'état de la technique et détermine un vecteur d'accélération linéaire $\vec{a}_{lin}$ et un vecteur d'accélération angulaire $\vec{a}_{ang}$ induites par le mouvement du véhicule sur la ou les parties du corps en contact avec l'interface haptique, lesdits vecteurs étant représentés dans un espace à trois dimensions. Le moteur physique peut également estimer la vitesse du véhicule. Cette estimation peut prendre en compte l'aspect rigide ou non de la liaison du point de contact virtuel avec le reste du véhicule, les accélérations linéaire et angulaires au niveau du point de contact virtuel sont déterminées. Le moteur physique peut également estimer les vitesses angulaires $\vec{v}_{lin}$ et $\vec{v}_{ang}$ du véhicule.

Dans une deuxième étape principale 102, des commandes stimuli sont calculées afin de contrôler l'interface haptique 103, 104. En effet, les vecteurs d'accélération linéaire et angulaire au point de contact virtuel sont ensuite traduits en force et en couple appliquées sensiblement au niveau du point de contact physique, les parties du corps en contact avec l'interface haptique étant ainsi stimulées, lesdits vecteurs étant représentés dans un espace à trois dimensions. D'autres commandes 105 peuvent aussi être déterminées par le moteur afin de commander d'autres équipements, de type multimédia par exemple. Lesdits équipements multimédia permettent par exemple de projeter sur un écran une séquence d'images accompagnée de sons représentatifs du déplacement du véhicule à destination de l'utilisateur. Des sons présents dans l'environnement peuvent également être diffusés.

Il est possible, dans une mise en oeuvre donnée, que le véhicule simulé n'apparaisse pas visuellement au niveau de l'équipement multimédia, mais que les mouvements de celui-ci soient simulés au niveau de l'interface haptique, ce mode pouvant être utilisé avantageusement dans le cadre d'applications de navigations. L'utilisateur peut ainsi se déplacer dans une ville virtuelle, par exemple, tout en ayant une illusion de mouvement.

L'interface haptique est en contact en au moins un point avec l'utilisateur et ce point correspond soit à un point d'appui en liaison rigide avec le véhicule soit à un point de contact non rigide, par exemple avec un équipement de commande dudit véhicule comme une manette de contrôle ou un volant ou un élément attaché au véhicule comme une corde. Le point de contact entre l'interface haptique et l'utilisateur peut correspondre à un point d'appui virtuel de l'utilisateur sur le véhicule ayant une liaison visco-élastique, avec frottement ou non, avec le reste du véhicule.

Pendant l'exécution de la troisième étape du procédé, une force de retour et un couple sont déterminés dans le but d'être appliqués sur le corps de l'utilisateur au niveau du point de contact physique avec l'interface haptique, par exemple sur les mains. Si il y a plusieurs points de contacts physiques, il est possible de déterminer une force et un couple pour chacun de ces points. Cette force 104 et ce couple 103 sont tridimensionnels et respectivement proportionnels aux vecteurs d'accélération linéaire et d'accélération angulaire déterminés à l'étape précédente.

La force de retour $\vec{F}_{3D}$, c'est-à-dire la force exercée par l'interface haptique à retour d'effort, peut être décrite par un vecteur tridimensionnel selon l'expression suivante :

$$\vec{F}_{3D} = \alpha \times m \times \vec{a}_{lin} \qquad (1)$$

dans laquelle :

$\vec{a}_{lin}$ est le vecteur d'accélération linéaire au niveau du point de contact virtuel représenté en trois dimensions ;
$\alpha$ est un coefficient réel paramétrable ;
m est la masse du véhicule.

Le coefficient $\alpha$ peut être positif ou négatif. Cela signifie que la force $\vec{F}_{3D}$ peut être dirigée dans le même sens ou dans le sens inverse de l'accélération $\vec{a}_{lin}$. La possibilité de paramétrer judicieusement $\alpha$ et de choisir ainsi le sens et l'intensité de la force $\vec{F}_{3D}$ permet d'adapter la simulation à l'utilisateur. Lorsqu'un bras à retour de force est utilisé en tant qu'interface haptique, la force $\vec{F}_{3D}$ peut s'exprimer en fonction du coefficient de raideur dudit bras en utilisant l'expression suivante :

$$\vec{F}_{3D} = k_r \times \vec{\lambda} \qquad (2)$$

dans laquelle :

$k_r$ est le coefficient de raideur du bras ;
$\vec{\lambda}$ est un vecteur tridimensionnel représentant le déplacement du bras à retour d'effort.

En utilisant les expressions (1) et (2), il est alors possible de relier le coefficient $\alpha$ à $\vec{\lambda}$ dans l'expression suivante :

$$\vec{\lambda} = \alpha \times \left( \frac{m}{k_r} \right) \times \vec{a}_{lin} \qquad (3)$$

Cette expression permet notamment d'ajuster le coefficient $\alpha$ aux caractéristiques du bras à retour de force utilisé.
Dans une mise en oeuvre alternative, la force $\vec{F}_{3D}$ peut être déduite d'une combinaison linéaire de l'accélération $\vec{a}_{lin}$, de la vitesse linéaire $\vec{v}_{lin}$ et de la dérivée de l'accélération linéaire $\vec{J}$ en utilisant l'expression suivante :

$$\vec{F}_{3D} = \alpha \times m \times \vec{a}_{lin} + \alpha' \times \vec{v}_{lin} + \alpha'' \times \vec{J} \qquad (4)$$

dans laquelle

$\alpha'$ est un second coefficient réel paramétrable ;
$\alpha''$ est un troisième coefficient réel paramétrable ;
J est le vecteur représentant la dérivée temporelle du vecteur accélération linéaire, habituellement désignée par l'expression anglo-saxonne « jerk »..

Dans une mise en oeuvre alternative de l'invention, la force $\vec{F}_{3D}$ peut s'exprimer comme une combinaison linéaire de puissances de l'accélération linéaire, de puissances de la vitesse linéaire et de puissances de la dérivée temporelle de l'accélération linéaire. La force $\vec{F}_{3D}$ peut aussi être déterminée en utilisant des informations sur la trajectoire du véhicule, comme par exemple le rayon de courbure ou la position dudit véhicule.

Comme explicité précédemment, la deuxième étape principale 102 du procédé détermine une force de retour et un couple appliqués sur le corps de l'utilisateur au niveau du point de contact physique avec l'interface haptique. Le couple est appliqué sensiblement au point d'application de la force $\vec{F}_{3D}$ et peut être exprimé en utilisant l'expression suivante :

$$\vec{C}_{3D} = \beta \times I \times \|\vec{a}_{ang}\| \times \vec{r} \qquad (5)$$

dans laquelle :

$\vec{a}_{ang}$ est le vecteur d'accélération angulaire au niveau du point de contact virtuel représenté en trois dimensions ;
$\beta$ est un coefficient réel paramétrable pouvant prendre une valeur positive ou négative ;
I est le moment d'inertie du véhicule simulé ;
r est un vecteur unitaire de rotation ayant la même direction que $\vec{C}_{3D}$.

Le couple $\vec{C}_{3D}$ peut aussi s'exprimer en utilisant l'expression suivante :

$$\vec{C}_{3D} = \tau \times \theta \times \vec{r} \qquad (6)$$

dans laquelle :

$\tau$ est la constante de torsion du bras à retour d'effort ;
$\theta$ est l'angle à parcourir.

Il est alors possible de lier $\theta$ au coefficient $\beta$ en utilisant l'expression suivante :

$$\theta = \beta \times \left(\frac{I}{\tau}\right) \times \|\vec{a}_{ang}\| \qquad (7)$$

L'expression (7) permet ainsi d'ajuster le coefficient $\beta$ aux caractéristiques de l'interface haptique utilisée.

La figure 2 donne un exemple de dispositif de simulation mettant en oeuvre le procédé selon l'invention. Dans cet exemple, l'utilisateur 200 est assis dans un siège 201, représentatif de celui présent dans le véhicule simulé. Des moyens de calcul tels que des microprocesseurs associés à des circuits de mémorisation peuvent être utilisés afin d'exécuter les différentes étapes du procédé selon l'invention décrit précédemment. Lesdits moyens peuvent être placés, par exemple, dans le socle 204 du siège 201. Un ou plusieurs équipements multimédia peuvent être utilisés. Par exemple un écran peut être placé devant le siège 201, ainsi qu'une pluralité d'enceintes audio positionnées autour dudit siège, ces équipements multimédia n'étant pas représentés sur la figure. Les informations multimédia peuvent aussi être transmises à l'aide d'un casque immersif, de type hmd par exemple, permettant une version portative de l'équipement multimedia. L'interface haptique utilisée dans cet exemple est un bras à retour de force. Celui-ci est composé d'un socle relié à deux axes mécaniques parallèles 208, 209 appelés axes de base, lesdits axes pouvant pivoter dans un même plan autour d'un axe de rotation localisé dans le socle, les deux axes restant parallèles durant le mouvement de pivot. Une première extrémité des axes de base est reliée au socle et une seconde extrémité est reliée à un axe mécanique appelé axe principal 205. Le mouvement des axes de base permet d'induire un mouvement de rotation bidimensionnel de l'axe principal. L'axe principal comprend trois sous-axes 205, 206, 207 et un bloc moteur 210. Un premier sous-axe 205 est relié aux axes des bases 208, 209 et une de ses extrémités est reliée au bloc moteur 210, ledit bloc étant fixe par rapport au premier sous-axe 205. Le bloc moteur est relié, d'autre part, aux deux autres sous-axes 206, 207 de l'axe principal, appelés sous-axes de manche. Le bloc moteur permet d'induire des mouvements de rotation et de translation à ces deux sous-axes, les trois sous-axes 206, 207, 205 restant orientés selon une même direction. Un manche est relié aux deux sous-axes de manche 203. Le manche est par exemple composé d'un bras 211 relié auxdits sous-axes et à une partie de contact 203, l'opérateur étant en contact avec ladite partie, par exemple en la saisissant avec ses deux mains. Les mouvements contrôlés des différents axes permettent ainsi la transmission de la force $F_{3D}$ et du couple $C_{3D}$ au niveau du manche.

Le bras à retour de force contrôlé en utilisant les commandes stimuli décrites précédemment permet la transmission d'une impression de mouvement à l'utilisateur. Pendant la stimulation haptique, l'utilisateur est censé résister à la force

$\vec{F}_{3D}$ et au couple $\vec{C}_{3D}$ auxquels il est soumis. Donc, il n'y a aucune limitation théorique à la durée de l'impression de mouvement ressentie par l'utilisateur.

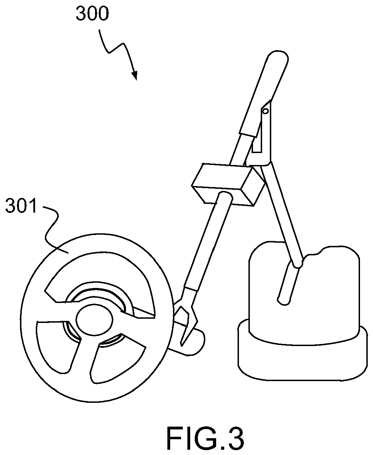

La figure 3 donne exemple de bras à retour de force étant associé à un volant à retour de force. Le bras à retour de force 300 est similaire à celui décrit à l'aide de la figure 2, sauf pour la partie correspondant au manche. En effet, il est possible d'utiliser un volant à retour d'effort 301. En combinaison avec les autres éléments du bras, il est possible d'avoir un volant mobile en translation 3D et dont l'axe actif ne serait plus uniquement l'axe fixe du volant mais un axe de rotation 3D. En effet, dans le cas d'une voiture par exemple, dans un virage sur une route incliné, le couple reçu dans les mains du pilote n'est pas forcément dans l'axe du volant.

## Revendications

1. Procédé de simulation de mouvements d'un véhicule virtuel, un utilisateur (200) étant en contact physique avec un simulateur comprenant une interface haptique (211, 300) à retour de force, ledit contact physique correspondant à au moins un point de contact physique entre l'interface haptique et le corps de l'utilisateur représentatif d'un point de contact virtuel entre l'utilisateur et le véhicule virtuel, ledit procédé étant **caractérisé en ce qu'**il comporte au moins deux étapes :

   - une première étape (101) déterminant un vecteur d'accélération linéaire $\vec{a}_{lin}$ et un vecteur vitesse linéaire $\vec{V}_{lin}$ au point de contact virtuel entre l'utilisateur et le véhicule virtuel, lesdits vecteurs étant représentatifs du mouvement du véhicule au niveau dudit point ;
   - une seconde étape (102) déduisant un vecteur force $\vec{F}_{3D}$ à trois dimensions du vecteur d'accélération linéaire $\vec{a}_{lin}$, et du vecteur vitesse linéaire $\vec{V}_{lin}$, ledit vecteur force étant déterminé par combinaison linéaire desdits vecteurs accélération linéaire et vitesse, la force correspondante étant appliquée par l'interface haptique sensiblement au niveau du point de contact physique.

2. Procédé selon la revendication 1 **caractérisé en ce que** la force $\vec{F}_{3D}$ est déduite d'une combinaison linéaire de puissances de l'accélération linéaire, de puissances de la vitesse linéaire et de puissances de la dérivée temporelle de l'accélération linéaire.

3. Procédé selon la revendication 1 **caractérisé en ce qu'**il comporte une étape déterminant un vecteur d'accélération angulaire $\vec{a}_{ang}$ au point de contact virtuel entre l'utilisateur (200) et l'interface haptique (211, 300), ledit vecteur étant représentatif du mouvement du véhicule au niveau dudit point de contact virtuel.

4. Procédé selon la revendication 3 caractérisé en en qu'il comporte une étape déduisant un vecteur couple $\vec{C}_{3D}$, à trois dimensions, du vecteur d'accélération angulaire $\vec{a}_{ang}$, ledit vecteur couple étant proportionnel audit vecteur accélération et le couple correspondant étant appliqué par l'interface haptique (211, 300) sensiblement au niveau du point de contact physique.

5. Procédé selon l'une quelconque des revendications précédentes **caractérisé en ce que** la force $\vec{F}_{3D}$ vérifie l'expression suivante :

$$\vec{F}_{3D} = \alpha \times m \times \vec{a}_{lin}$$

dans laquelle :

   $\vec{a}_{lin}$ est le vecteur d'accélération linéaire représenté en trois dimensions ;
   $\alpha$ est un coefficient réel paramétrable ;
   m est la masse du véhicule simulé.

6. Procédé selon l'une quelconque des revendications 4 ou 5 **caractérisé en ce que** le couple $\vec{C}_{3D}$ vérifie l'expression suivante :

$$\vec{C}_{3D} = \beta \times l \times \vec{a}_{ang}$$

dans laquelle :

$\vec{a}_{ang}$ est le vecteur d'accélération angulaire représenté en trois dimensions ;
β est un coefficient réel paramétrable pouvant prendre une valeur positive ou négative ;
I est le moment d'inertie du véhicule simulé.

7. Procédé selon l'une quelconque des revendications précédentes **caractérisé en ce que** le point de contact physique entre l'interface haptique (211, 300) et l'utilisateur (200) correspond à un point d'appui rigide avec le véhicule virtuel.

8. Procédé selon l'une quelconque des revendications précédentes **caractérisé en ce que** le point de contact physique entre l'interface haptique (211, 300) et l'utilisateur (200) correspond à un point de contact virtuel avec un équipement de commande du véhicule virtuel.

9. Dispositif de simulation de mouvements d'un véhicule virtuel, un utilisateur (200) étant en contact physique avec le dispositif comprenant une interface haptique à retour de force (211, 300), ledit contact physique correspondant à au moins un point de contact physique entre l'interface haptique et le corps de l'utilisateur représentatif d'un point de contact virtuel entre l'utilisateur et le véhicule virtuel, ledit dispositif étant **caractérisé en ce qu'**il comporte des moyens pour déterminer (101) un vecteur d'accélération linéaire $\vec{a}_{lin}$ et un vecteur vitesse linéaire $\vec{V}_{lin}$ au point de contact virtuel entre l'utilisateur et le véhicule virtuel, lesdits vecteurs étant représentatifs du mouvement du véhicule virtuel au niveau dudit point et des moyens pour déduire (102) un vecteur force $\vec{F}_{3D}$ à trois dimensions du vecteur d'accélération linéaire $\vec{a}_{lin}$ et du vecteur vitesse $\vec{v}$, ledit vecteur force étant déterminé par combinaison linéaire desdits vecteurs accélération linéaire et vitesse, la force correspondante étant appliquée par l'interface haptique sensiblement au niveau du point de contact physique.

10. Dispositif selon la revendication 9 **caractérisé en ce que** la force $\vec{F}_{3D}$ est déduite d'une combinaison linéaire de puissances de l'accélération linéaire, de puissances de la vitesse linéaire et de puissances de la dérivée temporelle de l'accélération linéaire.

11. Dispositif selon l'une quelconque des revendications 9 ou 10 **caractérisé en ce qu'**il comporte des moyens pour déterminer un vecteur d'accélération angulaire $\vec{a}_{ang}$ au point de contact entre l'utilisateur (200) et l'interface haptique (211, 300), ledit vecteur étant représentatif du mouvement du véhicule au niveau dudit point de contact.

12. Dispositif selon la revendication 11 caractérisé en en qu'il comporte des moyens pour déduire un vecteur couple $\vec{C}_{3D}$, à trois dimensions, du vecteur d'accélération angulaire $\vec{a}_{ang}$, ledit vecteur couple étant proportionnel audit vecteur accélération et le couple correspondant étant appliqué par l'interface haptique (211, 300) sensiblement au niveau du point de contact.

13. Dispositif selon l'une quelconques des revendications 10 à 12 **caractérisé en ce que** l'interface haptique est un bras à retour de force comprenant un manche (203) utilisé comme point de contact avec le corps de l'utilisateur.

14. Dispositif selon l'une quelconque des revendications 10 à 12 **caractérisé en ce que** l'interface haptique est un bras à retour de force (300) comprenant un volant à retour de force (301) utilisé comme point de contact avec le corps de l'utilisateur.

15. Dispositif selon l'une quelconque des revendications 10 à 14 **caractérisé en ce qu'**il comprend des moyens pour projeter une séquence d'image vidéo à l'utilisateur, ladite séquence étant représentative du mouvement simulé du véhicule.

**Patentansprüche**

1. Simulationsverfahren für Bewegungen eines virtuellen Fahrzeugs, wobei ein Nutzer (200) in körperlichem Kontakt mit einem Simulator ist, der eine haptische Schnittstelle (211, 300) mit Kraftrückmeldung umfasst, wobei der körperliche Kontakt mindestens einem körperlichen Kontaktpunkt zwischen der haptischen Schnittstelle und dem Körper des Nutzers entspricht, der für einen virtuellen Kontaktpunkt zwischen dem Nutzer und dem virtuellen Fahrzeug repräsentativ ist, wobei das Verfahren **dadurch gekennzeichnet ist, dass** es mindestens zwei Schritte umfasst:

- einen ersten Schritt (101), der einen linearen Beschleunigungsvektor $\vec{a}_{lin}$ und einen linearen Geschwindigkeitsvektor $\vec{V}_{lin}$ am virtuellen Kontaktpunkt zwischen dem Nutzer und dem virtuellen Fahrzeug bestimmt, wobei die Vektoren für die Bewegung des Fahrzeugs im Bereich des Punkts repräsentativ sind;

- einen zweiten Schritt (102), der einen dreidimensionalen Kraftvektor $\vec{F}_{3D}$ vom linearen Beschleunigungsvektor $\vec{a}_{lin}$ und linearen Geschwindigkeitsvektor $\vec{V}_{lin}$ abzieht, wobei der Kraftvektor durch eine lineare Kombination des linearen Beschleunigungs- und Geschwindigkeitsvektors bestimmt wird, wobei die entsprechende Kraft durch die haptische Schnittstelle im Wesentlichen im Bereich des körperlichen Kontaktpunkts angelegt wird.

2. Verfahren nach Anspruch 1, **dadurch gekennzeichnet, dass** die Kraft $\vec{F}_{3D}$ von einer linearen Kombination von Leistungen der linearen Beschleunigung, von Leistungen der linearen Geschwindigkeit und von Leistungen der zeitlichen Ableitung der linearen Beschleunigung abgezogen wird.

3. Verfahren nach Anspruch 1, **dadurch gekennzeichnet, dass** es einen Schritt umfasst, der einen Winkelbeschleunigungsvektor $\vec{a}_{ang}$ am virtuellen Kontaktpunkt zwischen dem Nutzer (200) und der haptischen Schnittstelle (211, 300) bestimmt, wobei der Vektor für die Bewegung des Fahrzeugs im Bereich des virtuellen Kontaktpunkts repräsentativ ist.

4. Verfahren nach Anspruch 3, **dadurch gekennzeichnet, dass** es einen Schritt umfasst, der einen dreidimensionalen Drehmomentvektor $\vec{C}_{3D}$ vom Winkelbeschleunigungsvektor $\vec{a}_{ang}$ abzieht, wobei der Drehmomentvektor zum Beschleunigungsvektor proportional ist und das entsprechende Drehmoment durch die haptische Schnittstelle (211, 300) im Wesentlichen im Bereich des körperlichen Kontaktpunkts angelegt wird.

5. Verfahren nach einem der vorhergehenden Ansprüche, **dadurch gekennzeichnet, dass** die Kraft $\vec{F}_{3D}$ den folgenden Ausdruck erfüllt:

$$\vec{F}_{3D} = \alpha \times m \times \vec{a}_{lin}$$

worin:

$\vec{a}_{lin}$ der dreidimensional dargestellte lineare Beschleunigungsvektor ist;

$\alpha$ ein parametrisierbarer realer Koeffizient ist;

m die Masse des simulierten Fahrzeugs ist.

6. Verfahren nach einem der vorhergehenden Ansprüche 4 oder 5, **dadurch gekennzeichnet, dass** das Drehmoment $\vec{C}_{3D}$ den folgenden Ausdruck erfüllt:

$$\vec{C}_{3D} = \beta \times I \times \vec{a}_{ang}$$

worin:

$\vec{a}_{ang}$ der dreidimensional dargestellte Winkelbeschleunigungsvektor ist;

$\beta$ ein parametrisierbarer realer Koeffizient ist, der einen positiven oder negativen Wert annehmen kann;

I das Trägheitsmoment des simulierten Fahrzeugs ist.

7. Verfahren nach einem der vorhergehenden Ansprüche, **dadurch gekennzeichnet, dass** der körperliche Kontaktpunkt zwischen der haptischen Schnittstelle (211, 300) und dem Nutzer (200) einem Punkt starrer Abstützung mit dem virtuellen Fahrzeug entspricht.

8. Verfahren nach einem der vorhergehenden Ansprüche, **dadurch gekennzeichnet, dass** der körperliche Kontaktpunkt zwischen der haptischen Schnittstelle (211, 300) und dem Nutzer (200) einem Punkt virtuellen Kontakts mit einem Steuergerät des virtuellen Fahrzeugs entspricht.

9. Simulationsvorrichtung für Bewegungen eines virtuellen Fahrzeugs, wobei ein Nutzer (200) in körperlichem Kontakt mit der Vorrichtung ist, die eine haptische Schnittstelle (211, 300) mit Kraftrückmeldung umfasst, wobei der körperliche Kontakt mindestens einem körperlichen Kontaktpunkt zwischen der haptischen Schnittstelle und dem Körper des Nutzers entspricht, der für einen virtuellen Kontaktpunkt zwischen dem Nutzer und dem virtuellen Fahrzeug repräsentativ ist, wobei die Vorrichtung **dadurch gekennzeichnet ist, dass** sie Einrichtungen, um einen linearen Beschleunigungsvektor $\vec{a}_{lin}$ und einen linearen Geschwindigkeitsvektor $\vec{V}_{lin}$ am virtuellen Kontaktpunkt zwischen dem Nutzer und dem virtuellen Fahrzeug zu bestimmen (101), wobei die Vektoren für die Bewegung des Fahrzeugs im Bereich des Punkts repräsentativ sind, und Einrichtungen umfasst, um einen dreidimensionalen Kraftvektor $\vec{F}_{3D}$ vom linearen Beschleunigungsvektor $\vec{a}_{lin}$ und linearen Geschwindigkeitsvektor $\vec{V}_{lin}$ abzuziehen (102), wobei der Kraftvektor durch eine lineare Kombination des linearen Beschleunigungs- und Geschwindigkeitsvektors bestimmt wird, wobei die entsprechende Kraft durch die haptische Schnittstelle im Wesentlichen im Bereich des körperlichen Kontaktpunkts angelegt wird.

10. Vorrichtung nach Anspruch 9, **dadurch gekennzeichnet, dass** die Kraft $\vec{F}_{3D}$ von einer linearen Kombination von Leistungen der linearen Beschleunigung, von Leistungen der linearen Geschwindigkeit und von Leistungen der zeitlichen Ableitung der linearen Beschleunigung abgezogen wird.

11. Vorrichtung nach einem der Ansprüche 9 oder 10, **dadurch gekennzeichnet, dass** sie Einrichtungen umfasst, um einen Winkelbeschleunigungsvektor $\vec{a}_{ang}$ am virtuellen Kontaktpunkt zwischen dem Nutzer (200) und der haptischen Schnittstelle (211, 300) zu bestimmen, wobei der Vektor für die Bewegung des Fahrzeugs im Bereich des virtuellen Kontaktpunkts repräsentativ ist.

12. Vorrichtung nach Anspruch 11, **dadurch gekennzeichnet, dass** sie Einrichtungen umfasst, um einen dreidimensionalen Drehmomentvektor $\vec{C}_{3D}$ vom Winkelbeschleunigungsvektor $\vec{a}_{ang}$ abzuziehen, wobei der Drehmomentvektor zum Beschleunigungsvektor proportional ist und das entsprechende Drehmoment durch die haptische Schnittstelle (211, 300) im Wesentlichen im Bereich des körperlichen Kontaktpunkts angelegt wird.

13. Vorrichtung nach einem der Ansprüche 10 bis 12, **dadurch gekennzeichnet, dass** die haptische Schnittstelle ein Arm mit Kraftrückmeldung ist, der einen Griff (203) aufweist, der als Kontaktpunkt mit dem Körper des Nutzers verwendet wird.

14. Vorrichtung nach einem der Ansprüche 10 bis 12, **dadurch gekennzeichnet, dass** die haptische Schnittstelle ein Arm (300) mit Kraftrückmeldung ist, der ein Lenkrad (301) mit Kraftrückmeldung aufweist, das als Kontaktpunkt mit dem Körper des Nutzers verwendet wird.

15. Vorrichtung nach einem der Ansprüche 10 bis 14, **dadurch gekennzeichnet, dass** sie Einrichtungen umfasst, um eine Videobildsequenz für den Nutzer zu projizieren, wobei die Sequenz für die simulierte Bewegung des Fahrzeugs repräsentativ ist.

**Claims**

1. A method for simulating the movements of a virtual vehicle, a user (200) being in physical contact with a simulator including a force-feedback haptic interface (211, 300), wherein said physical contact corresponds to at least one physical point of contact between the haptic interface and the body of the user that is representative of a virtual point of contact between the user and the virtual vehicle, said method being **characterized in that** it comprises at least two steps:

   - a first step (101) for determining a linear acceleration vector $\vec{a}_{lin}$ and a linear velocity vector $\vec{V}_{lin}$ at the virtual point of contact between the user and the virtual vehicle, said vectors being representative of the movement of the vehicle at said point;
   - a second step (102) for deducing a three-dimensional force vector $\vec{F}_{3D}$ from the linear acceleration vector $\vec{a}_{lin}$ and linear velocity vector $\vec{V}_{lin}$, said force vector being determined by a linear combination of said linear acceleration and velocity vectors, the corresponding force being applied via the haptic interface substantially at the physical point of contact.

2. The method according to claim 1, **characterized in that** the force $\vec{F}_{3D}$ is deduced from a linear combination of the linear acceleration powers, linear velocity powers, and linear acceleration time derivative powers.

3. The method according to claim 1, **characterized in that** it comprises a step for determining an angular acceleration vector $\vec{a}_{ang}$ at the virtual point of contact between the user (200) and the haptic interface (211, 300), said vector being representative of the movement of the vehicle at said virtual point of contact.

4. The method according to claim 3, **characterized in that** it comprises a step for deducing a three-dimensional torque vector $\vec{C}_{3D}$ of the angular acceleration vector $\vec{a}_{ang}$, said torque vector being proportional to said acceleration vector and the corresponding torque being applied by the haptic interface (211, 300) substantially at the physical point of contact.

5. The method according to any one of the preceding claims, **characterized in that** the force $\vec{F}_{3D}$ verifies the following expression:

$$\vec{F}_{3D} = \alpha \times m \times \vec{a}_{lin}$$

in which:

$\vec{a}_{lin}$ is the linear acceleration vector set in three dimensions;
$\alpha$ is a configurable real coefficient;
m is the mass of the simulated vehicle.

6. The method according to any one of claims 4 or 5, **characterized in that** the torque $\vec{C}_{3D}$ verifies the following expression:

$$\vec{C}_{3D} = \beta \times I \times \vec{a}_{ang}$$

in which:

$\vec{a}_{ang}$ is the angular acceleration vector set in three dimensions;
$\beta$ is a configurable real coefficient that can assume a positive or negative value;
I is the moment of inertia of the simulated vehicle.

7. The method according to any one of the preceding claims, **characterized in that** the physical point of contact between the haptic interface (211, 300) and the user (200) corresponds to a rigid support point with the virtual vehicle.

8. The method according to any one of the preceding claims, **characterized in that** the physical point of contact between the haptic interface (211, 300) and the user (200) corresponds to a virtual point of contact with control equipment of the virtual vehicle.

9. A device for simulating movements of a virtual vehicle, a user (200) being in physical contact with the device comprising a force-feedback haptic interface (211, 300), said physical contact corresponding to at least one physical point of contact between the haptic interface and the body of the user that is representative of a virtual point of contact between the user and the virtual vehicle, said device being **characterized in that** it comprises means for determining (101) a linear acceleration vector $\vec{a}_{lin}$ and a linear velocity vector $\vec{V}_{lin}$ at the virtual point of contact between the user and the virtual vehicle, said vectors being representative of the movement of the virtual vehicle at said point and means for deducing (102) a three-dimensional force vector $\vec{F}_{3D}$ from the linear acceleration vector $\vec{a}_{lin}$ and from the velocity vector $\vec{V}$, said force vector being determined by linear combination of said linear acceleration and velocity vectors, the corresponding force being applied by the haptic interface substantially at the physical point of contact.

10. The device according to claim 9, **characterized in that** the force $\vec{F}_{3D}$ is deduced from a linear combination of the linear acceleration powers, linear velocity powers, and linear acceleration time derivative powers.

**11.** The device according to any one of claims 9 or 10, **characterized in that** the device comprises a means for determining an angular acceleration vector $\vec{a}_{ang}$ at the point of contact between the user (200) and the haptic interface (211, 300), said vector being representative of the movement of the vehicle at said point of contact.

**12.** The device according to claim 11, **characterized in that** it comprises a means for deducing a three-dimensional torque vector $\vec{C}_{3D}$, from the angular acceleration vector $\vec{a}_{ang}$, said torque vector being proportional to said acceleration vector and the corresponding torque being applied by the haptic interface (211, 300) substantially at the point of contact.

**13.** The device according to any one of claims 10 to 12, **characterized in that** the haptic interface is a force-feedback arm comprising a column (203) used as point of contact with the user's body.

**14.** The device according to any one of claims 10 to 12, **characterized in that** the haptic interface is a force-feedback arm (300) comprising a force-feedback wheel (301) used as point of contact with the user's body.

**15.** The device according to any one of claims 10 to 14, **characterized in that** it comprises means for projecting a sequence of video images to the user, said sequence being representative of the simulated movement of the vehicle.

FIG.1

FIG.2

FIG.3

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **O. ERNST ; M. S. BANKS.** Human integrate visual and haptic information in a statistically optimal fashion. *Nature,* Janvier 2002, vol. 415